# EUROPÄISCHE PATENTSCHRIFT

(11) **EP 3 191 662 B1**
(45) Veröffentlichungstag und Bekanntmachung des Hinweises auf die Patenterteilung: **12.06.2019**
(21) Anmeldenummer: 15763544.2
(22) Anmeldetag: 09.09.2015
(51) Int. Cl.: E04H 12/16, E04H 12/34, B66C 23/18, B66C 23/20, B66D 1/30, B65H 49/30, F03D 13/20

(54) **VERFAHREN ZUM EINBRINGEN EINER MEHRZAHL VON SPANNGLIEDERN IN EINEN TURM UNTER VERWENDUNG EINES KRANS UND ABWICKELVORRICHTUNG ZUR VERWENDUNG IN DIESEM VERFAHREN**
METHOD FOR INSERTING A PLURALITY OF TENDONS INTO A TOWER BY MEANS OF A CRANE, AND UNWINDING DEVICE FOR USE IN SAID METHOD
PROCÉDÉ DE MONTAGE D'UNE PLURALITÉ D'ÉLÉMENTS DE PRÉCONTRAINTE DANS UNE TOUR AU MOYEN D'UNE GRUE ET DISPOSITIF DE DÉROULAGE DESTINÉ À ÊTRE UTILISÉ DANS LEDIT PROCÉDÉ

(30) Priorität: 10.09.2014 DE 102014218073
(43) Veröffentlichungstag der Anmeldung: 19.07.2017
(73) Patentinhaber: Dywidag-Systems International GmbH, 80796 München (DE)
(72) Erfinder: OFFENBERG, Peter, 86399 Bobingen (DE); SCHRÖDER, Jürgen, 41199 Mönchengladbach (DE); HEGMANN, Benedikt, 46509 Xanten (DE)
(74) Vertreter: Weickmann & Weickmann PartmbB
(86) Internationale Anmeldenummer: PCT/EP2015/070580
(87) Internationale Veröffentlichungsnummer: WO 2016/038077

(56) Entgegenhaltungen:
- EP-A1- 1 584 593
- EP-A2- 0 962 415
- US-A1- 2011 061 314
- BOEGL S ET AL: "Vorgespannte Hybridtuerme fuer Windenergieanlagen [Post-Tensioned Hybrid Towers for wind energy plants]", BAUINGENIEUR, SPRINGER, BERLIN, DE , Bd. 88, Nr. 8 1. August 2013 (2013-08-01), Seiten 301-306, XP008178424, ISSN: 0005-6650 Gefunden im Internet: URL:http://www.bauingenieur.de/bauing/arti cle.php?data[article_id]=74399 [gefunden am 2015-12-14] in der Anmeldung erwähnt

## Beschreibung

Die Erfindung betrifft ein Verfahren zum Einbringen einer Mehrzahl von Spanngliedern in einen Turm unter Verwendung eines Krans gemäß dem Oberbegriff des Anspruchs 1.

Ein derartiges Verfahren ist beispielsweise aus dem Artikel von S. Bögl et al. bekannt, der unter dem Titel "Vorgespannte Hybridtürme für Windenergieanlagen" in der Zeitschrift "Bauingenieur", Band 88, Juli/August 2013, Seiten 301 bis 306 veröffentlicht worden ist.

Dieser Artikel befasst sich ganz allgemein mit der Problematik, dass Windenergieanlagen auf Land immer höher gebaut werden, um den in höheren Luftschichten konstanteren und stärkeren Wind zur Energiegewinnung nutzen zu können. Bereits heute sind Windenergieanlagen mit einer Nabenhöhe von bis zu 145 m und einem Rotordurchmesser von bis zu 130 m keine Seltenheit, und ein Ende der Tendenz hin zu immer höheren Windenergieanlagen ist noch nicht abzusehen. Mit der zunehmenden Nabenhöhe und dem zunehmenden Rotordurchmesser müssen die Türme der Windenergieanlagen immer höhere Lasten von der Nabe zum Fundament hin übertragen.

Daneben müssen die Türme von Windenergieanlagen auch sehr eng tolerierte Eigenfrequenzanforderungen erfüllen. Der Grund hierfür liegt darin, dass die Windenergieanlagen mit variabler Rotordrehzahl betrieben werden, was eine variable Anregungsfrequenz auf den Turm der Windenergieanlage zur Folge hat. Die unvermeidlichen Anregungen aus dem Rotor und die hohen zyklischen Belastungen aus dem Wind führen zu Lastwechselzahlen, die jene von hoch dynamisch beanspruchten Brückenbauwerken um bis zu das 1000-fache (!) übertreffen können.

Da die herkömmlichen Stahlrohrtürme hier an ihre Grenzen geraten, schlägt der Artikel vor, Türme für Windenergieanlagen in der sogenannten Hybridbauweise zu errichten.

Bei dieser Hybridbauweise wird lediglich das obere Ende des Turms in herkömmlicher Stahlbauweise realisiert, während der Rest in Betonbauweise hergestellt werden. Der Turm wird auf einem in Ortbeton gegossenen Fundament errichtet, auf dem ringförmige Betonfertigteile übereinander angeordnet werden. Den oberen Abschluss des Betonfertigteilturmes bildet der sogenannte Adapter, auf dem der abschließende Stahlrohrturmabschnitt befestigt wird.

Innerhalb des Betonfertigteilturmes verlaufen vom Fundament bis hinauf zum Adapter Spannglieder, die die Fertigteilfugen so überdrücken, dass im Gebrauchszustand die Fugen immer überdrückt bleiben. Die Fertigteilbauweise hat hier den besonderen Vorteil, dass durch eine gleichbleibend hohe Betonqualität ein Bauteil mit nahezu konstantem E-Modul erzeugt werden kann. Dies und die vorgespannte Bauweise führen dazu, dass sich die theoretisch vorhergesagten Turmeigenfrequenzen mit hoher Genauigkeit auch in der Realität einstellen. Somit können die Eigenfrequenzanforderungen aus dem Betrieb der Windenergieanlage zuverlässig erfüllt werden.

Bei Betontürmen gibt es grundsätzlich zwei Möglichkeiten, die vertikal verlaufende Vorspannung zu realisieren. Auf dem Markt übliche Verfahren sind interne Spannglieder im nachträglichen Verbund oder externe Spannglieder ohne Verbund.

Spannverfahren mit externen Spanngliedern haben dabei den Vorteil, dass der Korrosionsschutz der Spannglieder schon werksmäßig aufgebracht werden kann. Dies ermöglicht auf der Baustelle eine schnelle Montage der Spannglieder. Zudem können die Spannglieder im Turminneren immer inspiziert, nachgespannt und erforderlichenfalls ausgetauscht werden. Ein weiterer Vorteil der externen Spannglieder wird sich zudem am Ende der relativ kurzen Betriebszeit der Windenergieanlagen von lediglich 20 bis 25 Jahren zeigen, wenn die Türme wieder rückgebaut werden müssen. Dies ist bei externen Spanngliedern in einfacher und somit kostengünstiger Weise möglich.

Üblicherweise werden die Spannglieder vorgefertigt und auf Trommeln aufgewickelt zur Baustelle transportiert. Dort werden die Spannglieder nacheinander von einem Kran, beispielsweise einem Mobilkran oder einem Turmdrehkran, in eine Abwickelvorrichtung eingebracht, samt dieser Abwickelvorrichtung zur Spitze des Betonfertigteilturms gehoben, d.h. auf die Höhe des Adapters, und mit dem Spannanker voraus von oben in den Turm eingebracht. Anschließend senkt der Kran die Abwickelvorrichtung wieder ab, um das nächste auf einer Trommel aufgewickelte Spannglied aufzunehmen.

Obgleich sich dieses Verfahren in der Praxis bewährt hat, ist es Aufgabe der Erfindung, das Verfahren zum Einbringen der Spannglieder in den Turm weiter zu verbessern.

Diese Aufgabe wird erfindungsgemäß gelöst durch ein Verfahren zum Einbringen einer Mehrzahl von Spanngliedern in einen Turm unter Verwendung eines Krans, umfassend die Schritte:
a) Bereitstellen der Mehrzahl von aufgewickelten Spanngliedern in einem dem Turm benachbart angeordneten Lagerbereich,
b) Aufnehmen eines der Spannglieder mittels einer Aufnehmervorrichtung des Krans,
c) Anheben des aufgenommenen Spannglieds zur Spitze des Turms,
d) Einführen des Spannglieds von oben in den Turm,
e) Absenken der Aufnehmervorrichtung zum Lagerbereich,
f) Wiederholen der Schritte b) bis e), vorzugsweise bis alle bereitgestellten Spannglieder in den Turm eingebracht worden sind,
wobei die Spannglieder nach dem Anheben zur Spitze des Turms in Schritt c) und vor dem Einführen des Spannglieds in den Turm in Schritt d) in einem Schritt c1) mit einer dort zumindest für die Dauer des Einbringverfahrens dauerhaft angeordneten Abwickelvorrichtung in Abwickeleingriff gebracht werden, und wobei die Schritte d) und e) einander zeitlich überlappend, vorzugsweise im Wesentlichen gleichzeitig, durchgeführt werden, d.h. dass die Aufnehmervorrichtung bereits wieder zum Lagerbereich abgesenkt wird, während das gerade zur Turmspitze angehobene Spannglied mittels der Abwickelvorrichtung von oben in den Turm eingebracht wird.

Auf diese Weise werden Wartezeiten vermieden, die bei dem bekannten Verfahren bislang unvermeidlich waren, da die Abwickelvorrichtung während der Durchführung des bekannten Verfahrens dauerhaft mit der Aufnehmervorrichtung des Krans verbunden war. So konnte bei dem bekannten Verfahren die Aufnehmervorrichtung des Krans erst dann wieder zum Lagerbereich abgesenkt werden, wenn das zuletzt zur Turmspitze angehobene Spannglied vollständig in den Turm eingeführt und dort montiert worden war. Dies führte zu Wartezeiten bei dem im Lagerbereich tätigen Personals während des Einführens des Spannglieds in den Turm und bei dem an der Turmspitze tätigen Personals während des Anhebens des nächsten Spannglieds vom Lagerbereich zur Turmspitze. Durch die erfindungsgemäße Trennung der Abwickelvorrichtung von der Aufnehmervorrichtung des Krans und ihre dauerhafte Anordnung an der Turmspitze ist es nunmehr möglich, die Aufnehmervorrichtung des Krans unmittelbar nach Herstellung des Abwickeleingriffs des gerade zur Turmspitze angehobenen Spannglieds mit der dauerhaft an der Turmspitze angeordneten Abwickelvorrichtung bereits wieder zum Lagerbereich abzusenken, um das nächste Spannglied aufzunehmen, während gleichzeitig das gerade zur Turmspitze angehobene Spannglied in den Turm eingeführt und dort montiert wird. Diese zeitliche Überlappung einiger Schritte des Verfahrens verkürzt die für die Montage eines Spannglieds insgesamt erforderliche Zeitdauer und reduziert somit die für die Montage anfallenden Kosten.

Vorzugsweise kann sogar schon damit begonnen werden, das nächste Spannglied aufzunehmen und dieses gegebenenfalls sogar bereits zur Turmspitze hin anzuheben. Mit anderen Worten kann der Schritt d) ferner zeitlich überlappend, vorzugsweise im Wesentlichen gleichzeitig, mit dem Schritt b) für das nächstfolgende Spannglied und gegebenenfalls sogar mit dem Schritt c) für das nächstfolgende Spannglied durchgeführt werden. Dies führt zu einer weiteren Reduzierung der für die Montage eines Spannglieds insgesamt erforderlichen Zeitdauer und somit der für die Montage anfallenden Kosten. Wie sich aus der vorstehenden Erläuterung ergibt, ist zur Durchführung des erfindungsgemäßen Verfahrens eine Abwickelvorrichtung erforderlich, die zumindest während der Durchführung des erfindungsgemäßen Verfahrens dauerhaft an der Turmspitze angeordnet ist. Die Erfindung betrifft daher nach einem weiteren Gesichtspunkt eine Abwickelvorrichtung zur Durchführung des erfindungsgemäßen Verfahrens, umfassend eine Basiseinheit, welche dazu ausgebildet und bestimmt ist, auf dem oberen Rand des Turms aufzustehen, und die von der Basiseinheit getragene und um eine Abwickelachse drehbare Spanngliedaufnahmeeinheit.

Die US 2011/0061314 A1 offenbart eine Abwickelvorrichtung nach dem Oberbegriff des Anspruchs 5.

In der nachstehenden Diskussion werden sowohl die Weiterbildungsmöglichkeiten des erfindungsgemäßen Verfahrens als auch die Weiterbildungsmöglichkeiten der erfindungsgemäßen Abwickelvorrichtung näher erläutert werden.

Um jedes Spannglied in einfacher Weise an der dafür vorgesehenen Umfangsposition der Turmspitze in den Turm einführen zu können, wird erfindungsgemäß vorgeschlagen, dass die Basiseinheit einen Basisrahmen umfasst, der die Spanngliedaufnahmeeinheit trägt, sowie eine Mehrzahl von am Basisrahmen befestigten Stützrollen, die derart angeordnet sind, dass der Basisrahmen auf dem oberen Rand der Turmspitze um die Turmachse verdrehbar ist. Bei der Hybridbauweise von Türmen, insbesondere für Windenergieanlagen, stehen an der Turmspitze eine Mehrzahl von Schraubbolzen nach oben ab,
die der Verbindung des Betonteils des Turms mit dem Stahlteil des Turms dienen. Diese Schraubbolzen sind üblicherweise in so dichter Anordnung vorgesehen, dass sie als äußere Führung für die Stützrollen dienen können. Zur Sicherstellung der seitlichen Führung der Basiseinheit ist es zusätzlich oder alternativ jedoch auch denkbar, dass ferner eine Mehrzahl von Führungsrollen vorgesehen ist, die sich seitlich an vertikalen Abschnitten der Turmwand abstützen. Die Führungsrollen können sich dabei an inneren vertikalen Abschnitten der Turmwand oder auch an äußeren vertikalen Abschnitten der Turmwand abstützen.

Um die Basiseinheit bei der Errichtung von Türmen einsetzen zu können, deren Turmspitzen einen unterschiedlichen Durchmesser aufweisen, wird dabei vorgeschlagen, dass die Position oder/und der Anstellwinkel der Stützrollen relativ zum Basisrahmen oder/und die Position der Führungsrollen relativ zum Basisrahmen verstellbar ist bzw. sind.

Wie bei dem bekannten Verfahren ist es grundsätzlich auch bei dem erfindungsgemäßen Verfahren möglich, auf Trommeln aufgewickelte Spannglieder zu verwenden. Es ist in diesem Fall dann allerdings erforderlich, dass die dauerhaft an der Turmspitze angeordnete Abwickelvorrichtung zwei Spanngliedaufnahmeplätze mit je einer Spanngliedaufnahmeeinheit umfasst. Wird ein auf einer Trommel aufgewickeltes Spannglied zur Turmspitze angehoben, so wird es von der Aufnehmervorrichtung des Krans auf dem jeweils freien Spanngliedaufnahmeplatz abgelegt. Anschließend nimmt die Aufnehmervorrichtung des Krans die leere Trommel des gerade in den Turm eingebrachten Spannglieds vom anderen Spanngliedaufnahmeplatz auf und senkt sie zum Lagerbereich ab, wo bereits das nächste auf einer Trommel aufgewickelte Spannglied auf seinen Transport zur Turmspitze wartet. Diese Weiterbildung des erfindungsgemäßen Verfahrens kann beispielsweise bei der Errichtung von Silos eingesetzt werden, da dort an der Spitze des Siloturms ausreichend Platz für das Vorsehen zweier Spanngliedaufnahmeplätze vorhanden ist.

Wenn an der Turmspitze hingegen beengtere Platzverhältnisse vorliegen, wie dies beispielsweise bei Türmen für Windenergieanlagen der Fall ist, so kann dort nur ein einziger Spanngliedaufnahmeplatz bereitgestellt werden. Um das erfindungsgemäße Verfahren auch in diesem Fall einsetzen zu können, wird vorgeschlagen, dass die Spannglieder in Schritt a) trommellos aufgewickelt bereitgestellt werden. In diesem Fall ist es nämlich nach dem Einbringen des Spannglieds in den Turm nicht erforderlich, eine leere Trommel wieder abzutransportieren. Bei trommellos aufgewickelten Spanngliedern kann der aufgewickelte Zustand beispielsweise durch eine Mehrzahl von Klammern sichergestellt werden, die über den Wickelumfang des Spannglieds verteilt angeordnet sind.

Um das Abwickeln der Spannglieder in möglichst einfacher Weise bewerkstelligen zu können, wird vorgeschlagen, dass die Spanngliedaufnahmeeinheit eine Stützvorrichtung umfasst, welche das trommellos aufgewickelte Spannglied von der Innenseite der Wicklung her stützt. Dies ermöglicht es, das Spannglied abzuwickeln, ohne dass es auf der Außenseite der Wicklung zu einem störenden Eingriff zwischen dem Spannglied und der Spanngliedaufnahmeeinheit kommt.

Beispielsweise kann die Stützvorrichtung eine Mehrzahl von Stangen umfassen, die sich im Wesentlichen in Richtung der Abwickelachse erstrecken. Eine derartige Stangenkonstruktion bietet für die die Spannglieder im trommellos aufgewickelten Zustand haltenden Klammern ausreichend Raum, so dass diese Klammern erst dann gelöst werden müssen, wenn sich das Spannglied mit der Spanngliedaufnahmeeinheit in einem das Abwickeln ermöglichenden Eingriff befindet.

Zur Erleichterung des In-Eingriff-Bringens des trommellos aufgewickelten Spannglieds mit der Spanngliedaufnahmeeinheit wird vorgeschlagen, dass die Stangen bezogen auf die Abwickelachse radial verlagerbar angeordnet sind. Dies ermöglicht es, die Stangen der Spanngliedaufnahmeeinheit zur Vorbereitung des In-Eingriff-Bringens in eine radial zusammengezogene Stellung überzuführen, in der sie leicht in den Innenraum der Wicklung des Spannglieds eingeführt werden können. Ist das Spannglied auf der von den Stangen gebildeten Stützvorrichtung der Spanngliedaufnahmeeinheit angeordnet, so werden die Stangen in eine radial aufgeweitete Stellung übergeführt, bis sie das Spannglied sicher halten. Dabei müssen nicht alle Stangen um die gleiche Strecke nach radial außen bewegt werden, um auch nicht ganz kreisrund gewickelte Spannglieder mittels der Spanngliedaufnahmeeinheit zuverlässig aufnehmen zu können.

Die für die radiale Verstellung der Stangen erforderlichen Antriebe können beispielsweise an einer Flanschkonstruktion der Spanngliedaufnahmeeinheit angeordnet sein, über welche die Spanngliedaufnahmeeinheit mit der Basiseinheit um die Abwickelachse drehbar verbunden ist.

Das trommellos aufgewickelte Spannglied kann beispielsweise in einem an der Aufnehmervorrichtung des Krans hängenden Zustand an die Spanngliedaufnahmeeinheit herangeführt werden, bis die radial zusammengezogene Stützvorrichtung in den Innenraum der Wicklung des Spannglieds eingreift. Hierbei brauchen keinerlei Reibungskräfte überwunden zu werden. Die Zentrierung des trommellos aufgewickelten Spannglieds relativ zur Stützvorrichtung kann dann in einfacher Weise durch das radiale Aufweiten der Stützvorrichtung erfolgen.

Für den Fall, dass die Stützvorrichtung der Spanngliedaufnahmeeinheit nicht spreizbar ausgebildet ist, wird vorgeschlagen, dass die Spanngliedaufnahmeeinheit der Abwickelvorrichtung zur Durchführung des Schritts c1) um einen vorbestimmten Winkel gekippt wird, bzw. dass die Spanngliedaufnahmeeinheit an einer Trägereinheit angeordnet ist, welche vom Basisrahmen absteht und mit diesem um eine im Wesentlichen horizontale Achse kippbar verbunden ist. Der vorbestimmte Winkel kann dabei derart bemessen sein, dass sich lediglich eine Schrägstellung der Spanngliedaufnahmeeinheit ergibt. Es ist jedoch auch denkbar, die Spanngliedaufnahmeeinheit derart zu kippen, dass die Abwickelachse im gekippten Zustand im Wesentlichen vertikal angeordnet ist. Durch den Kippwinkel wird erreicht, dass die durch das Eigengewicht des Spannglieds gravitationsbedingt hervorgerufenen Kräfte zumindest helfen, die Reibungskräfte zwischen der Stützvorrichtung und dem trommellos aufgewickelten Spannglied zu überwinden.

Grundsätzlich ist jedoch auch denkbar, eine Spanngliedaufnahmeeinheit, deren Stützvorrichtung nicht spreizbar ausgebildet ist, nicht kippbar auszubilden. In diesem Fall müssen die Reibungskräfte zwischen der Stützvorrichtung und dem Spannglied vom Baustellenpersonal entweder von Hand oder mit Hilfe von Werkzeugen überwunden werden.

In jedem Fall ist es jedoch vorteilhaft, wenn am freien Ende der Stützvorrichtung Sicherungsbolzen vorgesehen sind, die zwischen einer Aufsteckstellung, in der sie ein In-Eingriff-Bringen des trommellos aufgewickelten Spannglieds mit der Stützvorrichtung ermöglichen, und einer Sicherungsstellung, in der sie ein unbeabsichtigtes Außer-Eingriff-Treten von Spannglied und Stützvorrichtung verhindern, verstellbar sind.

Nachzutragen ist noch, dass die Spanngliedaufnahmeeinheit in beiden Drehrichtungen um die Abwickelachse drehbar ist. Somit kann das Spannglied nicht nur abgewickelt werden, um in den Turm eingeführt zu werden, sondern es kann erforderlichenfalls auch wieder aufgewickelt werden. Ferner kann der Spanngliedaufnahmeeinheit eine Bremsvorrichtung zugeordnet sein, welche einer von dem Eigengewicht des Spannglieds gravitationsbedingt erzeugten Beschleunigung der Abwickelbewegung entgegenwirkt.

Nachzutragen ist ferner, dass die Antriebsvorrichtung zum Verdrehen der Abwickelvorrichtung um die Turmachse in wenigstens einer der Stützrollen oder/und in wenigstens einer der Führungsrollen der Basiseinheit integriert sein kann.

Nachzutragen ist auch noch, dass die Antriebsvorrichtung zum Verdrehen der Abwickelvorrichtung um die Turmachse oder/und die Antriebsvorrichtung zum radialen Zusammenziehen und Aufweiten der Stützvorrichtung oder/und die Antriebsvorrichtung zum Kippen der die Spanngliedaufnahmeeinheit halternden Trägereinheit oder/und die Antriebsvorrichtung zur Verstellung der Sicherungsbolzen oder/und die Antriebsvorrichtung zum Abwickeln bzw. Aufwickeln des Spannglieds oder/und die Bremsvorrichtung zum Bremsen des Abwickelns des Spannglieds mechanisch oder/und elektromotorisch oder/und fluidisch (pneumatisch oder hydraulisch oder hydro-pneumatisch) antreibbar sein kann. Ferner kann wenigstens eine der vorstehend aufgezählten Verstellbewegungen manuell herbeigeführt werden.

Obgleich die Erfindung vorstehend am Beispiel von, insbesondere in Hybridbauweise gefertigten, Türmen für Windenergieanlagen erläutert wurde, sei an dieser Stelle darauf hingewiesen, dass das erfindungsgemäße Verfahren ganz allgemein bei Türmen eingesetzt werden kann, bei deren Errichtung vorgefertigte externe oder interne Spanngliedern eingesetzt werden. So kann das erfindungsgemäße Verfahren beispielsweise auch bei der Errichtung von Silos und dergleichen eingesetzt werden.

Die Erfindung wird im Folgenden anhand der beigefügten Zeichnung an Ausführungsbeispielen näher erläutert werden. Es stellt dar:
- Figur 1: eine schematische Darstellung einer nach der Hybridbauweise errichteten Windenergieanlage;
- Figur 2: eine geschnittene Ansicht eines Teils des Turms der Windenergieanlage der Figur 1;
- Figur 3: eine perspektivische Ansicht der gesamten Baustelle zur Erläuterung des erfindungsgemäßen Verfahrens;
- Figur 4: eine Vergrößerung des Details IV der Figur 3, nämlich eine perspektivische Ansicht der auf dem Adapter zwischen dem Betonturmabschnitt und dem Stahlturmabschnitt angeordneten Abwickelvorrichtung;
- Figur 5: eine weitere perspektivische Ansicht der Abwickelvorrichtung der Figur 4; und
- Figur 6: eine perspektivische Ansicht einer zweiten Ausführungsform der Abwickelvorrichtung.

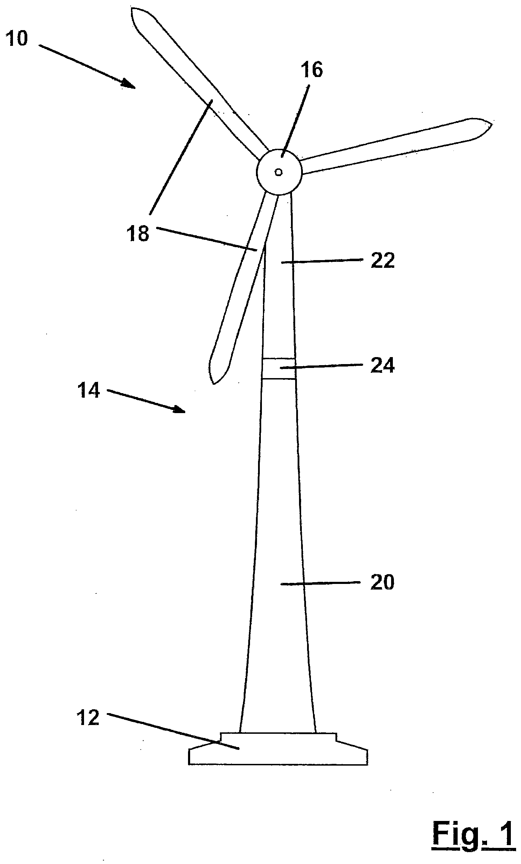

In Figur 1 ist eine in Hybridbauweise konzipierte Windenergieanlage ganz allgemein mit 10 bezeichnet. Sie umfasst einen auf einem Fundament 12 errichteten Turm 14, an dessen Spitze die Nabe 16 angeordnet ist, welche die Rotorflügel 18 trägt. Der Turm 14 umfasst einen Betonturmabschnitt 20, der auf dem Fundament 12 aufsteht, einen Stahlturmabschnitt 22, der die Nabe 16 trägt, sowie einen Adapter 24, der zwischen dem Betonturmabschnitt 20 und dem Stahlturmabschnitt 22 angeordnet ist.

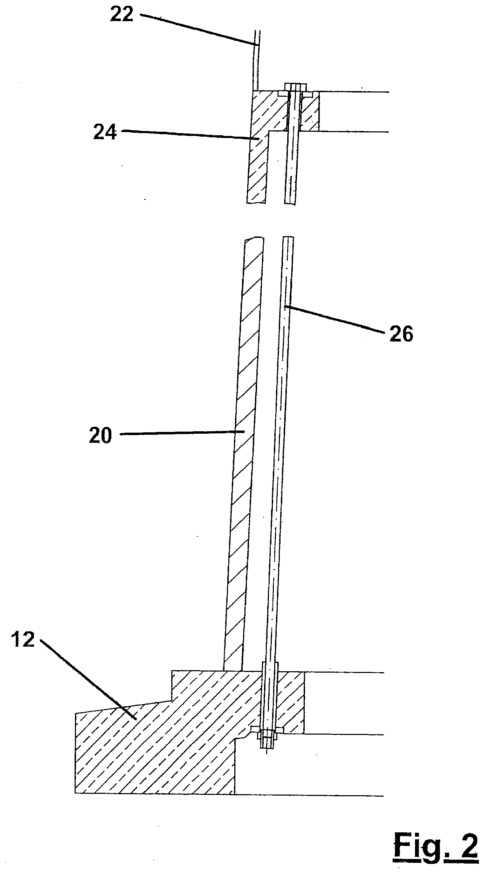

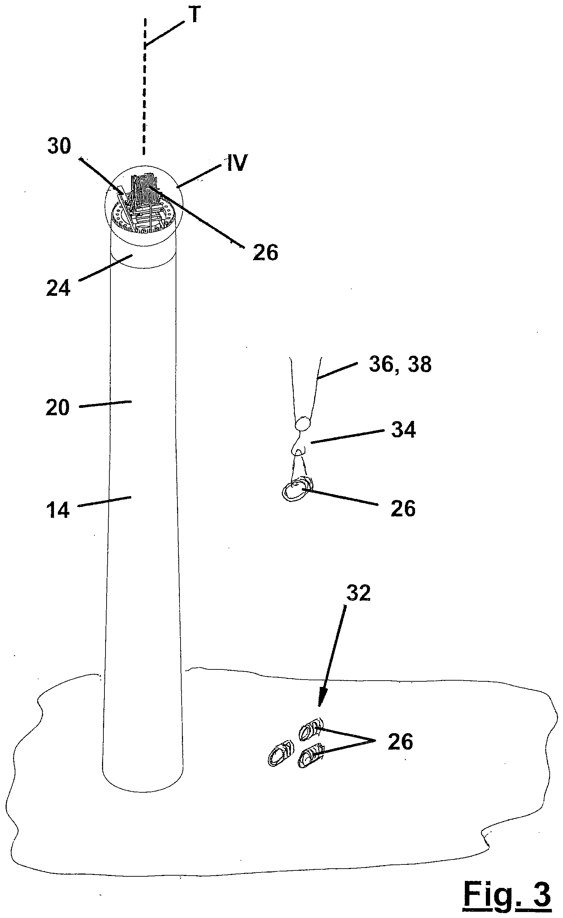

Gemäß Figur 2 ist der Betonturmabschnitt 20 mittels einer Mehrzahl von Spanngliedern 26, von denen in Figur 2 lediglich eines zu sehen ist, zwischen dem Fundament 12 und dem Adapter 24 verspannt. Die vorliegende Erfindung befasst sich mit dem Verfahren zum Einbringen dieser Spannglieder 26 in den Turm 14 und mit der zur Durchführung dieses Verfahrens erforderlichen Abwickelvorrichtung 30 (siehe Figur 3).

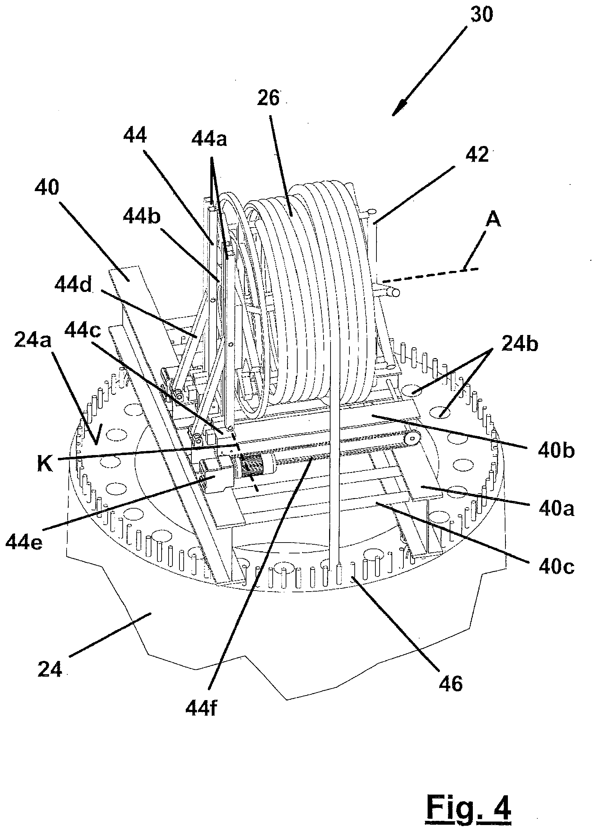

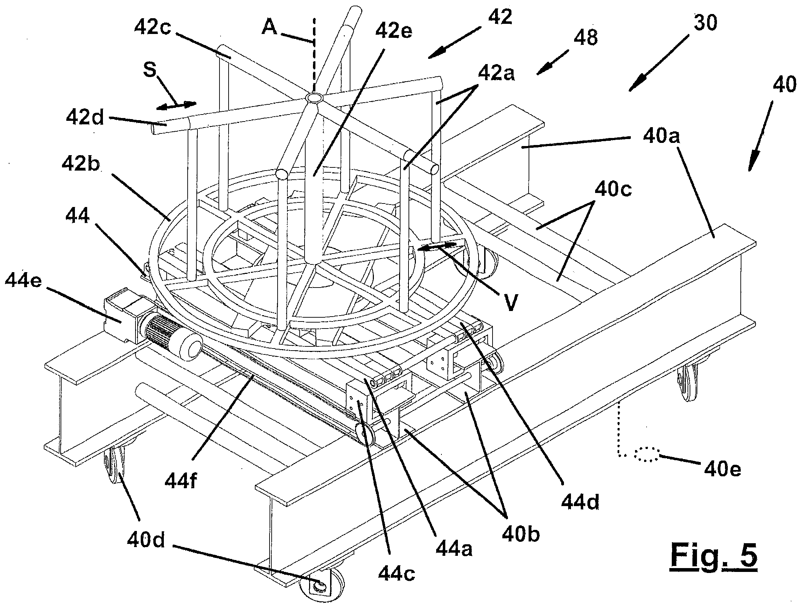

Nachfolgend soll zunächst mit Bezug auf Figur 3 das erfindungsgemäße Verfahren näher erläutert werden, bevor mit Bezug auf die Figuren 4 und 5 auf den Aufbau und die Funktion der Abwickelvorrichtung 30 eingegangen werden wird.

Wie in Figur 3 dargestellt, wurde in einem dem Turm 14, genauer gesagt dem Betonturmabschnitt 20, benachbarten Lagerbereich 32 der Baustelle eine Mehrzahl von aufgewickelten Spanngliedern 26 bereitgestellt. In dem dargestellten Ausführungsbeispiel sind die Spannglieder 26 trommellos aufgewickelt. Ferner ist in Figur 3 die Aufnehmervorrichtung 34 eines lediglich durch sein Hubseil 36 angedeuteten Baukrans 38 dargestellt, die eines der Spannglieder 26 aufgenommen hat und gerade dabei ist, dieses zur Spitze des Turms 14 anzuheben. Dort ist die Abwickelvorrichtung 30 gerade dabei, das auf diese Weise zuletzt zur Turmspitze transportierte Spannglied 26 von oben in den Turm 14 einzuführen. Sobald dieser Einführvorgang abgeschlossen ist, übergibt der Kran 38 das von ihm angehobene Spannglied 26 an die Abwickelvorrichtung 30 und senkt seine Aufnehmervorrichtung 34 wieder zum Lagerbereich 32 ab, um ein weiteres Spannglied 26 aufzunehmen. Gleichzeitig beginnt die Abwickelvorrichtung 30, das ihr gerade übergebene Spannglied 26 in den Turm 14 einzuführen.

Die Figuren 4 und 5 zeigen die Abwickelvorrichtung 30. Dabei ist Figur 4 eine Vergrößerung des Details IV aus Figur 3, und Figur 5 zeigt die Abwickelvorrichtung 30 in einem zur Aufnahme eines weiteren Spannglieds 26 bereiten Zustand.

Gemäß Figur 4 umfasst die Abwickelvorrichtung 30 eine Basiseinheit 40, mittels derer die Abwickelvorrichtung 30 auf der oberen Endfläche 24a des Adapters 24 aufsteht, eine Spanngliedaufnahmeeinheit 42, welche um eine Abwickelachse A drehbar ist, um das vom Kran 38 angelieferte Spannglied 26 durch eine der Durchbrechungen 24b in den Turm 14 einzuführen, und eine Trägereinheit 44, mittels derer die Spanngliedaufnahmeeinheit 42 mit der Basiseinheit 40 verbunden ist.

Die Basiseinheit 40 ist aus zwei Doppel-T-Trägern 40a, zwei, die Doppel-T-Träger 40a miteinander verbindenden Doppel-T-Trägern 40b und die Doppel-T-Träger 40a ebenfalls miteinander verbindenden Stabilisierungsstangen 40c zusammengesetzt. An der Unterseite der Doppel-T-Träger 40a sind Stützrollen 40d (siehe Figur 5) vorgesehen, mittels derer die Basiseinheit 40 auf der oberen Endfläche 24a des Adapters aufsteht. Die Position und der Anstellwinkel der Stützrollen 40d ist derart gewählt, dass die Abwickelvorrichtung 30 auf dem Adapter 24 um die Turmachse T (siehe Figur 3) gedreht werden kann, um das Spannglied 26 in einfacher Weise in die jeweils dafür vorgesehene Durchbrechung 24b einführen zu können. Schraubbolzen 46 des Adapters 24, die zur Verbindung mit dem Stahlturmabschnitt 22 dienen, werden dabei als seitliche Führung für die Stützrollen 40d verwenden. Um die Abwickelvorrichtung 30 bei Türmen unterschiedlichen Durchmessers verwenden zu können, ist es vorteilhaft, wenn die Position oder/und der Anstellwinkel der Stützrollen 40d an der Basiseinheit 40 einstellbar ist/sind.

Zusätzlich zu den Stützrollen 40d kann die Basiseinheit 40 auch noch Führungsrollen 40e aufweisen, die sich seitlich an vertikalen Abschnitten der Turmwand, vorzugsweise der Turminnenwand, abstützen. In Figur 5 ist lediglich eine dieser Führungsrollen 40e gepunktet angedeutet.

Wie man am besten in Figur 5 erkennt, ist die Spanngliedaufnahmeeinheit 42 als Stangenkonstruktion ausgebildet. Insbesondere umfasst die Spanngliedaufnahme 42 eine Mehrzahl von Stangen 42a, die parallel zur Abwickelachse A verlaufen und um die Abwickelachse A herum mit im Wesentlichen gleichen Umfangswinkelabstand voneinander angeordnet sind. Diese Stangen 42a bilden zusammen eine Stützvorrichtung 48, die die Aufgabe hat, das aufgewickelte Spannglied 26 von innen her zu stützen und somit quasi die Funktion der Spindel einer Kabeltrommel übernimmt.

An dem mit der Trägereinheit 44 verbundenen Ende der Stützvorrichtung 48 sind die Stangen 42a mit einer Flanscheinheit 42b verbunden, mittels derer die Spanngliedaufnahmeeinheit 42 um die Abwickelachse A drehbar mit der Trägereinheit 44 verbunden ist. Am freien Ende der Stangen 42a sind von der Abwickelachse A strahlenförmig weg verlaufende Abschlussstreben 42c vorgesehen. In den Endabschnitten von zumindest einigen dieser Abschlussstreben 42c sind Sicherungsbolzen 42d gelagert, die zwischen einer Aufsteckstellung, in der sie ein In-Eingriff-Bringen des Spannglieds 26 mit der Stützvorrichtung 48 ermöglichen, und einer Sicherungsstellung (siehe Figur 5), in der sie ein unbeabsichtigtes Außer-Eingriff-Treten von Spannglied 26 und Stützvorrichtung 48 verhindern, verstellbar sind. Dies ist an einem der Sicherungsbolzen 42d durch den Doppelpfeil S angedeutet. Die Flanscheinheit 42b einerseits und die Kombination der Abschlussstreben 42c mit den Sicherungsbolzen 42d andererseits übernehmen quasi die Funktion der Endflansche einer Kabeltrommel.

Zur Erleichterung des In-Eingriff-Bringens des Spannglieds 26 mit der Abwickelvorrichtung 42 können die Stangen 42a bezüglich der Abwickelachse A in radialer Richtung verstellbar sein. Dies ist in Figur 5 an einer der Stangen 42a durch den Doppelpfeil V angedeutet.

Nachzutragen ist noch, dass zur Erhöhung der Stabilität der Abwickelvorrichtung 42 ferner eine zentrale Stange 42e vorgesehen ist, die im Wesentlichen entlang der Abwickelachse A verläuft und an ihrem einen Ende mit der Flanscheinheit 42b und mit ihrem anderen Ende mit den Abschlussstreben 42c verbunden ist.

Wie sich aus der Zusammenschau der Figuren 4 und 5 ergibt, ist die Trägereinheit 44 und mit ihr die Abwickelvorrichtung 42 um eine im wesentlichen horizontal verlaufende Achse K kippbar ausgebildet. Insbesondere umfasst die Trägereinheit 44 Haupstreben 44a, die über eine Verbindungsplatte 44b miteinander verbunden sind. Die Verbindungsplatte 44b dient zur drehbaren Lagerung der Abwickelvorrichtung 42. Die Hauptstreben 44a sind mit Gleitschuhen 44c gelenkig, insbesondere um die Achse K kippbar, verbunden, welche auf den Doppel-T-Trägern 40b längs diesen zwischen einer ersten Stellung (Figur 4) und einer zweiten Stellung (Figur 5) verschiebbar angeordnet sind. An den Doppel-T-Trägern 40b sind ferner Hilfsstreben 44d angelenkt, und zwar jenem Ende der Doppel-T-Träger 40b benachbart, das den Gleitschuhen 40c nächstgelegen ist, wenn sich diese in der ersten Stellung befinden. Die anderen Enden der Hilfsstreben 44d sind etwa auf Höhe der Abwickelachse A an den Hauptstreben 44a angelenkt.

Befinden sich die Gleitschuhe 44c in der ersten Stellung (Figur 4), so stehen die Hauptstreben 44a aufrecht, so dass die Abwickelachse im Wesentlichen horizontal verläuft. Bewegen sich nun die Gleitschuhe 44c von der ersten Stellung (Figur 4) in Richtung auf die zweite Stellung (Figur 5) zu, so kippen die Hauptstreben 44a aufgrund gelenkigen Verbindung mit den Hilfsstreben 44d nach hinten um, wodurch sich die Abwickelachse A aufrichtet, bis sie bei Erreichen der zweiten Stellung der Gleitschuhe 44c im Wesentlichen vertikal verläuft (Figur 5).

Nachzutragen ist noch, dass Elektromotoren 44e vorgesehen sind, die einen mit den Gleitschuhen 44c verbundenen Kettentrieb 44f antreiben, um die Gleitschuhe 44c zwischen der ersten und der zweiten Stellung hin und her zu bewegen.

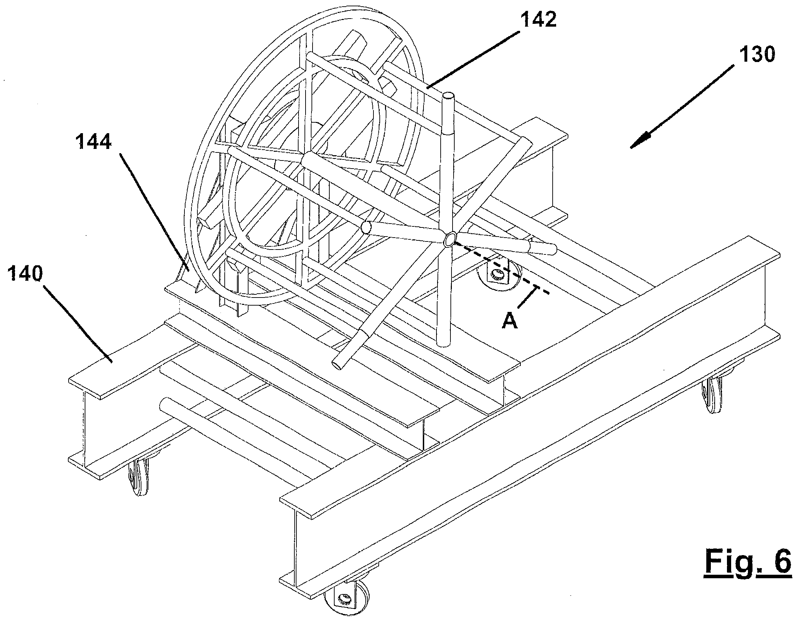

In Figur 6 ist eine abgewandelte Ausführungform der Abwickelvorrichtung dargestellt. Da die Abwickelvorrichtung der Figur 6 im Wesentlichen der Abwickelvorrichtung 30 der Figuren 4 und 5 entspricht, sind in Figur 6 analoge Teile mit den gleichen Bezugszeichen versehen wie in den Figuren 4 und 5, jedoch vermehrt um die Zahl 100. Darüber hinaus wird die Abwickelvorrichtung 130 der Figur 6 im Folgenden nur insoweit beschrieben werden, als sie sich von der Abwickelvorrichtung 30 der Figuren 4 und 5 unterscheidet, auf deren Beschreibung hiermit ansonsten ausdrücklich verwiesen sei.

Die Abwickelvorrichtung 130 unterscheidet sich von der Abwickelvorrichtung 30 lediglich hinsichtlich der Trägereinheit 144. Diese ist bei der Ausführungsform gemäß Figur 6 starr, d.h. nicht kippbar, ausgebildet. Die Abwickelvorrichtung 142 und mit ihr die Abwickelachse A verharrt somit stets in der gleichen Relativstellung bezüglich der Basiseinheit 140. Selbstverständlich ist die Abwickelvorrichtung 142 aber an der Trägereinheit 144 um die Abwickelachse A drehbar angeordnet.

## Patentansprüche

1. Verfahren zum Einbringen einer Mehrzahl von Spanngliedern (26) in einen Turm (14) unter Verwendung eines Krans (38), umfassend die Schritte:
a) Bereitstellen der Mehrzahl von aufgewickelten Spanngliedern (26) in einem dem Turm (14) benachbart angeordneten Lagerbereich (32),
b) Aufnehmen eines der Spannglieder (26) mittels einer Aufnehmervorrichtung (34) des Krans (38),
c) Anheben des aufgenommenen Spannglieds (26) zur Spitze des Turms (14),
d) Einführen des Spannglieds (26) von oben in den Turm (14),
e) Absenken der Aufnehmervorrichtung (34) zum Lagerbereich (32),
f) Wiederholen der Schritte b) bis e),
**dadurch gekennzeichnet,**
**dass** die Spannglieder (26) nach dem Anheben zur Spitze des Turms (14) in Schritt c) und vor dem Einführen des Spannglieds (26) in den Turm in Schritt d) in einem Schritt c1) mit einer dort zumindest für die Dauer des Einbringverfahrens dauerhaft angeordneten Abwickelvorrichtung (30) in Abwickeleingriff gebracht werden, und
**dass** die Schritte d) und e) einander zeitlich überlappend, vorzugsweise im Wesentlichen gleichzeitig, durchgeführt werden, d.h. dass die Aufnehmervorrichtung (34) bereits wieder zum Lagerbereich (32) abgesenkt wird, während das gerade zur Turmspitze angehobene Spannglied (26) mittels der Abwickelvorrichtung (30) von oben in den Turm (14) eingebracht wird.

2. Verfahren nach Anspruch 1,
**dadurch gekennzeichnet, dass** der Schritt d) ferner zeitlich überlappend, vorzugsweise im Wesentlichen gleichzeitig, mit dem Schritt b) für das nächstfolgende Spannglied und gegebenenfalls auch mit dem Schritt c) für das nächstfolgende Spannglied durchgeführt wird.

3. Verfahren nach Anspruch 1 oder 2,
**dadurch gekennzeichnet, dass** die Spannglieder (26) in Schritt a) trommellos aufgewickelt bereitgestellt werden.

4. Verfahren nach einem der Ansprüche 1 bis 3,
**dadurch gekennzeichnet, dass** eine Spanngliedaufnahmeeinheit (42) der Abwickelvorrichtung (30) zur Durchführung des Schritts c1) um einen vorbestimmten Winkel gekippt wird.

5. Abwickelvorrichtung zur Durchführung des Verfahrens nach einem der Ansprüche 1 bis 4, umfassend:
• eine Basiseinheit (40), welche dazu ausgebildet und bestimmt ist, auf dem oberen Rand des Turms (14) aufzustehen, und
• eine von der Basiseinheit (40) getragene und um eine Abwickelachse (A) drehbare Spanngliedaufnahmeeinheit (42).
**dadurch gekennzeichnet, dass** die Basiseinheit (40) einen Basisrahmen (40a, 40b, 40c) umfasst, der die Spanngliedaufnahmeeinheit (42) trägt, sowie eine Mehrzahl von am Basisrahmen (40a, 40b, 40c) befestigten Stützrollen (40d), die derart angeordnet sind, dass der Basisrahmen (40a, 40b, 40c) auf dem oberen Rand der Turmspitze um die Turmachse (T) verdrehbar ist.

6. Vorrichtung nach Anspruch 5,
**dadurch gekennzeichnet, dass** die Basiseinheit (40) eine Mehrzahl von Führungsrollen (40e) umfasst, die sich seitlich an vertikalen Abschnitten der Turmwand abstützen.

7. Vorrichtung nach Anspruch 5 oder 6,
**dadurch gekennzeichnet, dass** die Position oder/und der Anstellwinkel der Stützrollen (40d) relativ zum Basisrahmen (40a, 40b, 40c) oder/und die Position der Führungsrollen (40e) relativ zum Basisrahmen (40a, 40b, 40c) verstellbar ist bzw. sind.

8. Vorrichtung nach einem der Ansprüche 5 bis 7,
**dadurch gekennzeichnet, dass** die Spanngliedaufnahmeeinheit (42) eine Stützvorrichtung (48) umfasst, welche das trommellos aufgewickelte Spannglied (26) von der Innenseite der Wicklung her stützt.

9. Vorrichtung nach Anspruch 8,
**dadurch gekennzeichnet, dass** die Stützvorrichtung (48) eine Mehrzahl von Stangen (42a) umfasst, die sich im Wesentlichen in Richtung der Abwickelachse (A) erstrecken.

10. Vorrichtung nach Anspruch 9,
**dadurch gekennzeichnet, dass** die Stangen (42a) bezogen auf die Abwickelachse (A) radial verlagerbar angeordnet sind.

11. Vorrichtung nach einem der Ansprüche 8 bis 10,
**dadurch gekennzeichnet, dass** am freien Ende der Stützvorrichtung (48) Sicherungsbolzen (42d) vorgesehen sind, die zwischen einer Aufsteckstellung, in der sie ein In-Eingriff-Bringen des trommellos aufgewickelten Spannglieds (26) mit der Stützvorrichtung (48) ermöglichen, und einer Sicherungsstellung, in der sie ein unbeabsichtigtes Außer-Eingriff-Treten von Spannglied (26) und Stützvorrichtung (48) verhindern, verstellbar sind.

12. Vorrichtung nach einem der Ansprüche 5 bis 11,
**dadurch gekennzeichnet, dass** die Spanngliedaufnahmeeinheit (42) an einer Trägereinheit (44) angeordnet ist, welche vom Basisrahmen (40a, 40b, 40c) absteht und mit diesem um eine im Wesentlichen horizontale Achse (K) kippbar verbunden ist.

## Claims

1. Method for introducing a plurality of tendons (26) into a tower (14) using a crane (38), comprising the steps of:
a) providing the plurality of wound tendons (26) in a storage area (32) adjacent to the tower (14),
b) picking up one of the tendons (26) by means of a pick-up device (34) of the crane (38),
c) lifting the picked-up tendon (26) to the top of the tower (14),
d) introducing the tendon (26) into the tower (14) from above,
e) lowering the pick-up device (34) to the storage area (32),
f) repeating steps b) to e),
**characterised in that** the tendons (26), after being lifted to the top of the tower (14) in step c) and before the tendon (26) is introduced into the tower in step d), are brought into unwinding engagement with an unwinding device (30) in step c1), which is fixedly arranged at said top of the tower at least for the duration of the introducing method, and **in that** steps d) and e) are carried out in a temporally overlapping, preferably substantially simultaneous, manner, meaning that the pick-up device (34) is already being lowered back to the storage area (32) while the tendon (26) that has just been lifted to the top of the tower is introduced into the tower (14) from above by means of the unwinding device (30).

2. Method according to claim 1, **characterised in that** step d) is also carried out in a temporally overlapping, preferably substantially simultaneous, manner with step b) for the next tendon and optionally also with step c) for the next tendon.

3. Method according to either claim 1 or claim 2, **characterised in that** the tendons (26) are provided wound up without a reel in step a).

4. Method according to any of claims 1 to 3, **characterised in that** a tendon receiving unit (42) of the unwinding device (30) is tilted at a predetermined angle in order to carry out step c1).

5. Unwinding device for carrying out the method according to any of claims 1 to 4, comprising:
• a base unit (40) which is designed and intended to stand on the top of the tower (14), and
• a tendon receiving unit (42) which is carried by the base unit (40) and can be rotated about an unwinding axis (A).
**characterised in that** the base unit (40) comprises a base frame (40a, 40b, 40c) which carries the tendon receiving unit (42), and a plurality of support rollers (40d) fastened to the base frame (40a, 40b, 40c) which are arranged such that the base frame (40a, 40b, 40c) can be rotated on the top of the tower about the tower axis (T).

6. Device according to claim 5, **characterised in that** the base unit (40) comprises a plurality of guide rollers (40e) which are laterally supported against vertical portions of the tower wall.

7. Device according to either claim 5 or claim 6, **characterised in that** the position and/or the set angle of the support rollers (40d) can be adjusted relative to the base frame (40a, 40b, 40c) and/or the position of the guide rollers (40e) can be adjusted relative to the base frame (40a, 40b, 40c).

8. Device according to any of claims 5 to 7, **characterised in that** the tendon receiving unit (42) comprises a supporting device (48) which supports the tendon (26), which is wound without a reel, from the inner side of the winding.

9. Device according to claim 8, **characterised in that** the supporting device (48) comprises a plurality of rods (42a) which extend substantially in the direction of the unwinding axis (A).

10. Device according to claim 9, **characterised in that** the rods (42a) are arranged so as to be radially movable relative to the unwinding axis (A).

11. Device according to any of claims 8 to 10, **characterised in that** securing bolts (42d) are provided at the free end of the supporting device (48) and can be moved between an inserted position, in which they allow the tendon (26) which is wound without a reel to be brought into engagement with the supporting device (48), and a securing position, in which they prevent the tendon (26) and the supporting device (48) from inadvertently disengaging.

12. Device according to any of claims 5 to 11, **characterised in that** the tendon receiving unit (42) is arranged on a carrier unit (44) which protrudes from the base frame (40a, 40b, 40c) and is connected thereto so as to be tiltable about a substantially horizontal axis (K).

## Revendications

1. Procédé d'insertion d'éléments de serrage (26) dans une tour (14) à l'aide d'une grue (38), comprenant les étapes suivantes :
a) mise à disposition de la pluralité d'éléments de serrage (26) enroulés dans une zone de stockage (32) disposée à proximité de la tour (14),
b) prise en charge d'un des éléments de serrage (26) au moyen d'un dispositif de prise en charge (34) de la grue (38),
c) levage de l'élément de serrage (26) prise en charge vers la pointe de la tour (14),
d) introduction de l'élément de serrage (26) par en haut dans la tour (14),
e) abaissement du dispositif de prise en charge (34) vers la zone de stockage (32),
f) répétition des étapes b) à e),
**caractérisé en ce que**
les éléments de serrage (26) sont mis en position d'emboîtement de déroulement après le levage vers la pointe de la tour (14) à l'étape c) et avant l'introduction de l'élément de serrage (26) dans la tour à l'étape d), dans une étape c1), avec un dispositif de déroulement (30) qui y est disposé durablement, pendant au moins la durée du procédé d'insertion et
les étapes d) et e) sont effectuées en se superposant dans le temps, de préférence de manière globalement simultanée, c'est-à-dire que le dispositif de prise en charge (34) est déjà à nouveau abaissé vers la zone de stockage (32) pendant que l'élément de serrage (26), qui vient d'être levé vers la pointe de la tour, est inséré, au moyen du dispositif de déroulement (30) par le haut dans la tour (14).

2. Procédé selon la revendication 1,
**caractérisé en ce que** l'étape d) est en outre effectuée en se superposant dans le temps, de préférence de manière globalement simultanée, avec l'étape (b) pour l'élément de serrage suivant et, le cas échéant, également avec l'étape c) pour l'élément de serrage suivant.

3. Procédé selon la revendication 1 ou 2,
**caractérisé en ce que** les éléments de serrage (26) sont mis à disposition de manière enroulée sans tambour à l'étape a).

4. Procédé selon l'une des revendications 1 à 3,
**caractérisé en ce qu'**une unité de prise en charge d'élément de serrage (42) du dispositif de déroulement (30) est basculé d'un angle prédéterminé pour l'exécution de l'étape c1).

5. Dispositif de déroulement pour l'exécution du procédé selon l'une des revendications 1 à 4, comprenant :
• une unité de base (40), qui est conçue et déterminée pour être posée sur le bord supérieur de la tour (14) et
• une unité de prise en charge d'élément de serrage (42) supportée par l'unité de base (40) et rotative autour d'un axe de déroulement (A).
**caractérisé en ce que** l'unité de base (40) comprend un châssis de base (40a, 40b, 40c) qui supporte l'unité de prise en charge de l'élément de serrage (42), ainsi qu'une pluralité de rouleaux d'appui (40d) fixés au châssis de base (40a, 40b, 40c), qui sont disposés de façon à ce que le châssis de base (40a, 40b, 40c) puisse tourner sur le bord supérieur de la pointe de la tour autour de l'axe de la tour (T).

6. Dispositif selon la revendication 5,
**caractérisé en ce que** l'unité de base (40) comprend une pluralité de rouleaux de guidage (40e) qui s'appuient latéralement contre des portions verticales de la paroi de la tour.

7. Dispositif selon la revendication 5 ou 6,
**caractérisé en ce que** la position et/ou l'angle de réglage des rouleaux d'appui (40d) par rapport au châssis de base (40a, 40b, 40c) et/ou la position des rouleaux de guidage (40e) par rapport au châssis de base (40a, 40b, 40c) est ou sont réglable(s).

8. Dispositif selon l'une des revendications 5 à 7,
**caractérisé en ce que** l'unité de prise en charge d'élément de serrage (42) comprend un dispositif d'appui (48) qui soutient l'élément de serrage (26) enroulé sans tambour à partir du côté intérieur de l'enroulement.

9. Dispositif selon la revendication 8,
**caractérisé en ce que** le dispositif d'appui (48) comprend une pluralité de tiges (42a) qui s'étendent globalement dans la direction de l'axe de déroulement (A).

10. Dispositif selon la revendication 9,
**caractérisé en ce que** les tiges (42a) sont disposées de manière mobile radialement par rapport à l'axe de déroulement (A).

11. Dispositif selon l'une des revendications 8 à 10,
**caractérisé en ce que**, à l'extrémité libre du dispositif d'appui (48), sont prévus des boulons de fixation (42d) qui sont réglables entre une position d'insertion, dans laquelle ils permettent l'emboîtement de l'élément de serrage (26) enroulé sans tambour avec le dispositif d'appui (48) et une position de sécurisation, dans laquelle ils empêchent un déboîtement par inadvertance de l'élément de serrage (26) et du dispositif d'appui (48).

12. Dispositif selon l'une des revendications 5 à 11,
**caractérisé en ce que** l'unité de prise en charge d'élément de serrage (42) est disposée sur une unité de support (44) qui s'étend à partir du châssis de base (40a, 40b, 40c) et est reliée avec celui-ci de façon à pouvoir basculer autour d'un axe globalement horizontal (K).
